# EUROPEAN PATENT SPECIFICATION

(11) **EP 2 456 144 B1**
(45) Date of publication and mention of the grant of the patent: **30.10.2013**
(21) Application number: 12155573.4
(22) Date of filing: 14.08.2008
(51) Int. Cl.: H04L 12/701

(54) **Method, device and system for identifying a service**
Verfahren, Vorrichtung und ein System zum Identifizieren eines Dienstes
Procédé, dispositif et système pour identifier un service

(30) Priority: 17.08.2007 CN 200710076518
(43) Date of publication of application: 23.05.2012
(62) Divisional of application: 08783973.4
(73) Proprietor: Huawei Technologies Co., Ltd., Longgang District, Shenzhen Guangdong 518129 (CN)
(72) Inventor: Li, Ronggao, Guangdong 518129 (CN)
(74) Representative: Kreuz, Georg Maria

(56) References cited:
- EP-A1- 1 677 462
- EP-A1- 1 780 983
- US-A1- 2006 193 320

## Description

### FIELD OF THE INVENTION

The present invention relates to a communication technology field, and particularly to a method, device and system for identifying a service.

### BACKGROUND

In the communication technology field, a user needs to contact a service provider when initiating a service request. When the service request meets conditions, the service provider provides services in response to the service request. For example, in data services, the user may initiate a service request for a multimedia messaging service (MMS) via a terminal such as a cell phone. In order to contact the service provider, an IP address and a port of a wireless application protocol gateway (WAP GW) as well as an access point name (APN) need to be configured in the cell phone. The address of a service gateway should also be configured correctly at the same time. When all these parameters are configured correctly, the object of the service request may be realized.

The inventor of the present invention found in the process of studying and practicing the above prior art that the system may typically take the address and the port of the WAP GW as default and the APN may be identified automatically, but the service request can not be realized correctly when the address of the service gateway is configured wrongly. This means that the prior art has the following disadvantages: Correct configuration of the address of the service gateway becomes a prerequisite for transmitting multimedia messages correctly and the service of transmitting multimedia messages can not be achieved when the address of the service gateway is configured wrongly in the terminal.
Patent application EP 1677462 Al discloses a system that implements robust service discovery in dynamic networks. It defines a relevance field, for a given service type, over the nodes of the network, namely by attributing, to each node, a relevance value phi(n). The relevance field is defined such that it has local maxima, each of which corresponds to a node (j1, j2) offering the given service type.

### SUMMARY

The present disclosure provides a method, device and system for identifying a service which enables a service request to be identified correctly and hence transmitting the multimedia messaging service correctly even when a terminal is configured wrongly.

A first aspect of embodiment of the disclosure provides a method for processing a service request, comprising:
receiving, by a WAP gateway, a service request from a terminal including a URL address and a service content type of the service request, wherein the URL address is configured on the terminal; and
when the URL address is correctly configured on the terminal, identifying, by the WAP gateway, a service type of the service request according to the URL address;
when the URL address is wrongly configured on the terminal, identifying, by the WAP gateway, a service type of the service request according to the service content type included in the service request;
executing a corresponding service process according to the identified service type of the service request

An second aspect of the disclosure discloses an application protocol gateway, comprising:
a receiving unit, configured to receive a service request from a terminal including a URL address and a service content type of the service request, wherein the URL address is configured on the terminal; and
a determining unit configured to determine whether the URL address is correctly configured on the terminal;
a resolving unit, configured to when the URL address is correctly configured on the terminal, to identify a service type of the service request according to the URL address; when the URL address is wrongly configured on the terminal, to identify a service type of the service request according to the service content type included in the service request;
an executing unit, configured to execute a corresponding service process according to the identified service type of the service request.

Other preferred embodiments are provided according to dependent claims 2-5, and 7-10.

With the technical solutions described in embodiments of the present invention, a service content type for indicating a service type of the service request is included in the service request. When the service gateway is configured wrongly in the terminal, the service type of the service request may also be determined according to the service content type, thereby realizing service normally. For example, after receiving a service request, if the service gateway address is configured by the terminal wrongly, the service request is determined according to the service content type and corresponding service flow is carried out. For example, when it is the MMS service, the service request is processed according to the MMS service flow, therefore realizing MMS service and providing better insurance for realizing service successfully.

### BRIEF DESCRIPTION OF DRAWINGS

In order to make the technical problems to be solved in the present invention, the adopted technical solution and advantages clearer, the present invention will be described further in detail with reference to accompanying drawings and in conjunction with embodiments. It should be appreciated that all the drawings are not necessarily drawn to scale and not intended to limit the present invention. In the drawings:
Fig. 1 is an architecture diagram of a service implementing system in prior art;
Fig. 2 is a signaling flow chart of implementing multimedia messaging service in prior art on the basis of Fig. 1;
Fig. 3 is a flow chart of the method for identifying a service according to an embodiment of the present invention;
Fig. 4 is a flow chart of the method for identifying a service according to another embodiment of the present invention; and
Fig. 5 is an architecture diagram of the service processing system including an application protocol gateway according to an embodiment of the present invention.

### DETAILED DESCRIPTION

Technical solutions of the present invention will be described further with reference to embodiments below.

For convenience of description, definitions and functions of messages involved in embodiments of the present invention is described briefly here. What described here are only general meanings and common standard specifications should be referred for improper description here. The description here is not intended to limit the invention.

The following are definitions and functions of messages involved in embodiments of the present invention:
M-Send.req, a message submitted to a multimedia message service center (MMSC) by a sender terminal via a WAP GW;
M-Send.conf, a response message returned to the sender terminal by the MMSC after receiving the message submitted by the sender terminal;
M-Notification.ind, a push notification message for notifying a receiver terminal to get a message from the MMSC, which is transmitted to the receiver terminal by the MMSC after receiving the multimedia message submitted by the sender terminal;
M-NotifyResp.ind, a message for indicating whether the multimedia message is received successfully, which is sent to the MMSC by the receiver terminal;
M_GET_REQ, transmitted by the receiver terminal to the MMSC, which instructs to retrieve the multimedia message;
M-Retrieve.req, transmitted by the receiver terminal to the MMSC, which instructs to request to retrieve the multimedia message;
M-Retrieve.conf, a response message returned by the MMSC after receiving the GET message from the receiver terminal; and
M-Acknowledge.ind, a message for indicating reception status, which is transmitted to the WAP GW by the receiver terminal after completing reception of multimedia message.

An embodiment of the present invention is described as follows.

The multimedia message is a message that includes text, picture, video and audio contents, which is an enhancement of a short message service. If a user wants to use the MMS, he/she needs to configure an IP address and a port of the WAP GW and the APN on the cell phone terminal, and meanwhile configuring the address of the service gateway correctly is needed. After all the three parameters are configured correctly, the multimedia message can be transmitted correctly. A typical service gateway is for example the MMSC. If an operator deploys a plurality of MMSCs, the MMSCs are interconnected. When a user transmits an MMS message, a home MMSC is typically used for providing service. In this time, the WAP GW is needed to forward the service request to the home MMSC of the user. In order to realize the forwarding by the WAP GW, it needs to inquire an electronic numbers to uniform resource identifier (URI) mapping (ENUM) server to acquire the home MMSC of the user according to the address of the MMSC reported by a terminal of the user. For convenience of description, the electronic number to uniform resource identifier mapping server is referred to as an ENUM server. An example procedure may be described as follows: a user may be roamed from home province B to province A and transmits a service request for accessing an MMS from a visited (namely roamed)WAP GW ; the visited WAP GW may receive the service request for accessing an MMS transmitted by the user, and inquire the ENUM server to acquire the uniform resource locator (URL) address of the home MMSC of the user (hereinafter referred to as a URL address); the visited WAP GW may transmit directly the service request for accessing an MMS to the home MMSC of the user; and, the home MMSC of the user may return an MMS message transmission response.

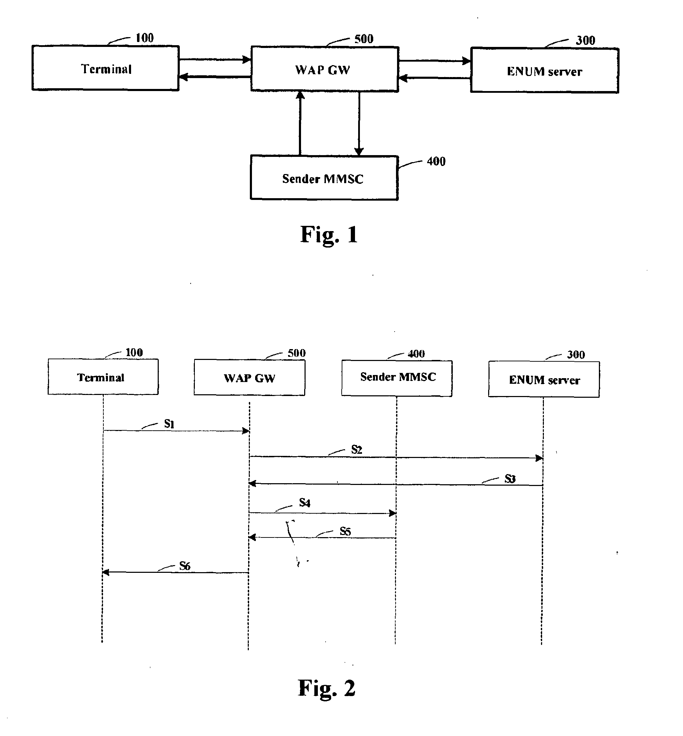

As shown in the system architecture of Fig. 1 and the signaling flow chart based on Fig. 1 of Fig. 2, the embodiment is further described in detail below.

S1: A terminal 100 may transmit an M-Send.req request message to a WAP GW 500 by taking a WAP as a carrying protocol. The terminal 100 is referred to as a sender terminal that is configured with the address of an MMSC.

S2: The WAP GW 500 may receive the request message from the terminal 100 and resolves the URL address included in the service request. If the address is http://mmsc.monternet.com, it is regarded that the service request is a multimedia messaging service request, and the user identification of the sender is obtained from the service request and an inquiry that the address of the home MMSC of the sender is retrieved from the ENUM server 300 is initiated.

S3: The ENUM server 300 may return to the WAP GW 500 an inquiry result including the address of the home MMSC of the sender.

S4: According to the response message, the WAP GW 500 may forward the M-Send.Req request message to the home MMSC 400 of the sender, to request to transmit the multimedia message.

S5: The home MMSC 400 of the sender may respond to the request message of the WAP GW 500 and incorporate an M-Send.conf in the response to indicate that the request has been accepted.

S6: The WAP GW 500 may forward the M-Send.conf to the terminal 100.

In the above-mentioned embodiment, in order to transmit the multimedia message, it is needed to configure correctly the address "http://mmsc.monternet.com" of the MMSC in the terminal (referring to the step S2 in the above-mentioned embodiment). If the address is configured wrongly as for example "http://mms.monternet.com", the WAP GW will identify wrongly and fail to process the request as the MMS, hence leading failure of transmission of the multimedia message. This may bring poor experience for users and is adverse for the operator to actively promote services.

The processing procedure for a person information management (PIM) service is the same with the above embodiment of transmitting multimedia messages. The PIM service may be mainly for synchronization of data such as a telephone directory, a scheduling table and an album between a cell phone terminal and the PIM server. For example, with synchronization operation on the telephone directory, a user may synchronize phone numbers on the terminal of the user to the PIM server.

The processing procedure for the PIM service is similar to that of the MMS service. The WAP GW may receive the request message from the terminal and resolve the URL address included in the service request. If it is determined that the service to be executed is the PIM service, the ENUM server is inquired to acquire the address of the home PIM server of the user and the service request is forwarded to the home PIM server of the user by the WAP GW. However, if the terminal is configured with a wrong URL address, the WAP GW will identify wrongly and fail to process the service request as the PIM service. Thus the purpose of the service request can not be realized, which brings poor experience to users and is adverse for the carrier to actively promote services.

An embodiment of the present invention provides a technical solution in which the WAP GW may respond normally to a service request, identify a service correctly and implement service process according to the service request even when the terminal is configured with the wrong address of the service gateway. For example, a service content type included in the service request may be also incorporated as one of identifying features for the WAP GW, so that the WAP GW may identify the service request not only according to the URL address of the service request but also according to the type of service contents included in the service request such as content information included in the Content-Type field of the service request.

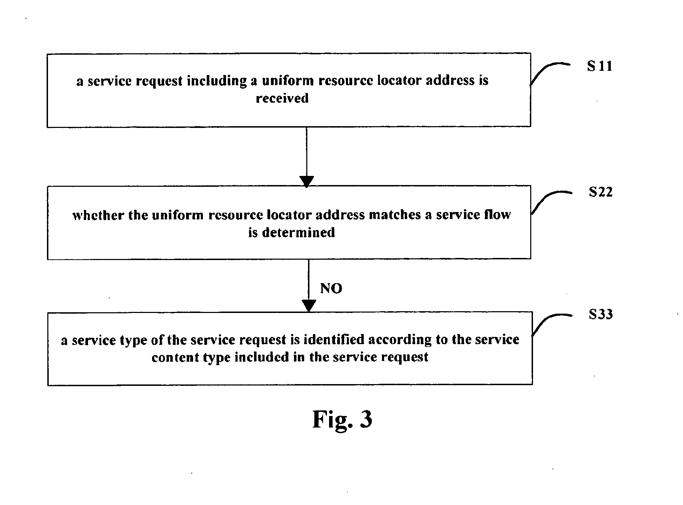

As shown in Fig. 3, an embodiment of the present invention provides a method for identifying services, and the method may include the following steps.

S11: A service request including a URL address is received;

S22: Whether the URL address matches a service flow is determined.

S33: A service type of the service request is identified according to a service content type included in the service request, when the determination result indicates that the URL address matches no service flow.

For example, a visited application protocol gateway (typically a WAP GW) may receive the service request of a roaming user and determine whether the URL address included in the service request is the URL address of an MMSC. If the URL address included in the service request is the URL address of the MMSC, the process proceeds to the process procedure of prior art. If the URL address included in the service request is not the URL address of the MMSC, the service type of the service request is identified according to the service content type included in the service request.

S44: A request for inquiring the address of the service server corresponding to the identified service type is transmitted after the service type of the service request is identified. For example, when the identified service type is the service request for the multimedia message, a request for inquiring the address of the home MMSC of the sender of the service request is transmitted.

The above-mentioned step that whether the URL address matches a service flow is determined may further include the following steps: whether the URL address is the URL address of the MMSC or the address of the home PIM server of the user is determined; If the URL address is the URL address of the MMSC, the process proceeds to the MMS service procedure; and If the URL address is the address of the home PIM server of the user, the process proceeds to the PIM service procedure.

In the above-mentioned embodiment, the type of service content included in the service request may be information included in a field of the service request and the field may be for example the Content-Type field.

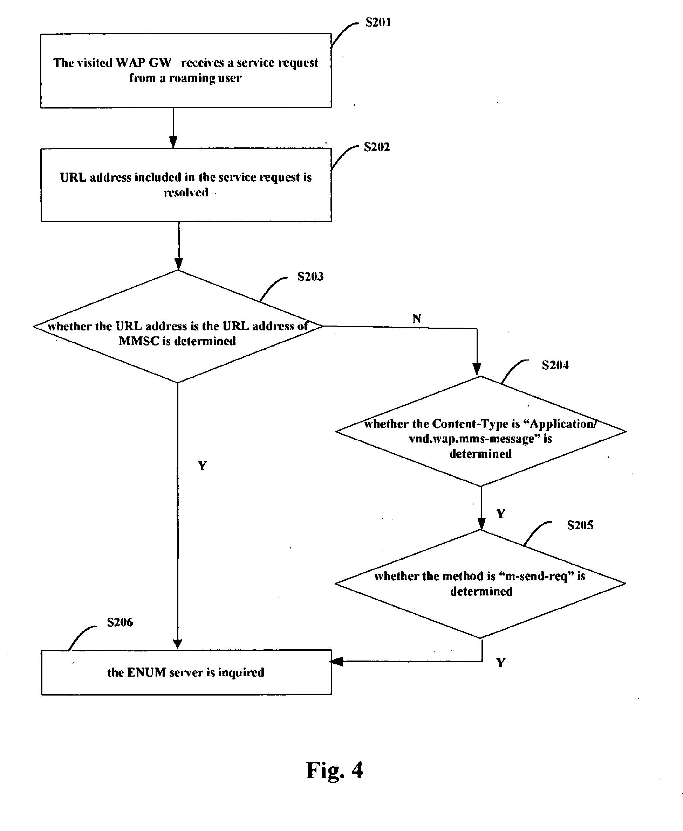

Referring to Fig. 4, the present embodiment may be described further as follows.

S201: The service request from the roaming user is received by the visited WAP GW .

S202: The URL address included in the service request is resolved.

S203: Whether the URL address is the URL address of the MMSC such as "http://mmsc.monternet.com" is determined.

S204: Whether the service request is the MMS is identified continually according to the service content type included in the service request. The included service content type is for example the content in the Content-Type field. If the content is the service content type of the MMS, for example, the content is "Application/vnd.wap. mms-message", it is determined that the service request is an MMS request.

In addition, a determination feature may be further added, and the following is an example.

S205: It is needed that the MMS service request is a request for transmitting MMS service and the content information type of the Content-Type field is the MMS. For example, if a content of a method field in the service request is "m-send-req", it is determined that the service request is the MMS service request.

A determination step may also be added in an embodiment of the present invention. For example, the request for inquiring the address of the home MMSC of the user is transmitted to the ENUM server when the service route table is matched successfully according to multipurpose internet mail extensions (MIME).An MIME message may include text, image, voice, video and data specific to other application programs.

S206: The request for inquiring the address of the home MMSC of the user is transmitted to the ENUM server if the WAP GW determines that the service request satisfying the above-mentioned conditions is the MMS service request.

With the technical solution described in the above-mentioned embodiments, it is realized that the WAP GW can determine and identify correctly the service type by the service content type and carry out subsequent steps for implementing the MMS even when the address of the service gateway is configured wrongly in the terminal. Thus the user's service request is correctly realized, the user's experience is satisfied well, which is equivalent to enhancing the fault tolerant processing capacity of the WAP GW and is advantageous for the operator's service promotion.

Similarly, in the data services, particularly in the message services, the Content-type field in the service request may be extended to facilitate the WAP GW to correctly identify the service type corresponding to the service request. Again, the PIM service is taken as an example below.

The visited WAP GW may resolve the URL address included in the service request after receiving the service request from the roaming user.

Whether the URL address is the URL address of the PIM service is determined. If it is determined that the URL address is not the URL address of the PIM service, whether the service request is the PIM service is identified according to the service content type included in the service request. The included service content type may be for example the content in the included Content-Type field. If the content is the content type of the PIM service, it is determined that the service request is the PIM service request. Subsequent processing steps are carried out according to the prior art PIM service procedure.

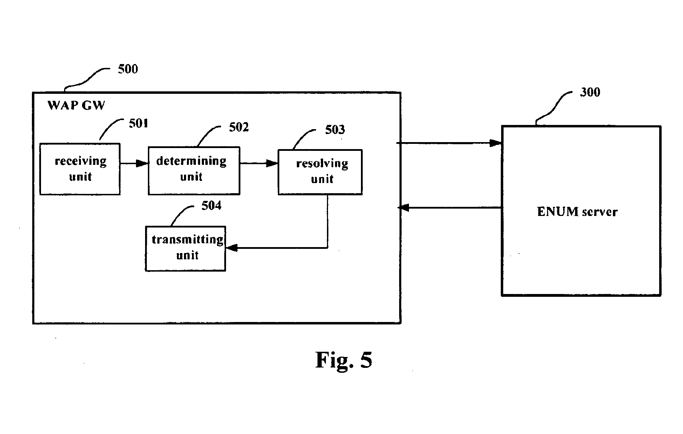

An embodiment of the present invention may also provide a application protocol gateway such as a WAP GW. Referring to Fig. 5, the WAP GW 500 includes a receiving unit 501, a determining unit 502, and a resolving unit 503.

The receiving unit 501 is configured to receive a service request including a URL address.

The determining unit 502 is configured to determine whether the URL address matches a service flow.

The resolving unit 503 is configured to resolve the service content type included in the service request to identify the service type of the service request when the determination result of the determining unit 502 indicates that the URL address matches no service flow.

The determining unit 502 may determine whether the URL address matches a service flow. Further, the determining unit 502 may determine whether the URL address included in the service request is the URL address of the MMSC or the address of the home PIM server of the user.

The resolution result of the resolving unit 503 may include the service content type to which the service request belongs, for example the MMS service or the PIM service.

The WAP GW 500 may further include a transmitting unit 504 configured to transmit a request for inquiring the address of the service server corresponding to the identified service type. For example, when the resolution result is the MMS service, the transmitting unit 504 may transmit to the ENUM server 300 a request for inquiring the address of the home MMSC of the user.

The WAP GW 500 in the procedure of processing the service request may be described as follows.

The WAP GW 500 may typically be the visited WAP GW . After the receiving unit 501 receives from a roaming user a service request including generally a URL address, the resolving unit 503 may resolve the service content type included in the service request. Before the resolving of the resolving unit 503, the determining unit 502 may determine whether the URL address included in the service request is the URL address of the MMSC such as "http://mmsc.monternet.com". If it is determined that the URL address included in the service request is not the URL address of the MMSC, the resolving unit may resolve the service content type included in the service request, and the service type of the service request is identified according to the resolution result (namely the service content type). If it is identified that the service type of the service request is the MMS service, it may also be further determined that the service request is a request for transmitting the MMS service. After that, a request for inquiring the address of the home MMSC of the user is transmitted to the ENUM server 300. Subsequent steps proceed to the prior art procedure and are not described further here.

With the technical solution described in the above-mentioned embodiments, the fault toleration capability of the WAP GW may be enhanced. The addition of determination feature may increase probability of identifying the service type correctly and better ensure normal operation of the service. And it is easier to implement with lower cost.

An embodiment of the present invention may also provide a service processing system including a terminal, an application protocol gateway and an application server.

The terminal is configured to transmit a service request including a field identifying the service content type of the service request.

The application protocol gateway may be for example the WAP GW 500 shown in Fig. 5 and is configured to resolve the service request transmitted by the terminal, identify the service type of the service request according to the field of the service content type and process service procedure according to the identified service type.

The application server may be for example the ENUM server 300 shown in Fig. 5 and is configured to receive the inquiry request from the application protocol gateway and inquire the address of the service server corresponding to the identified service type. The inquiring the address of the service server corresponding to the identified service type is further described as follows: Referring to Fig. 5, for example, when the service type identified by the WAP GW 500 is the MMS service, the ENUM server 300 may receive from the WAP GW 500 the request for inquiring the address of the home MMSC of the user and return to the WAP GW 500 an inquiry result including the address of the home MMSC of the user. Here, the server corresponding to the MMS service is the home MMSC of the user. For example again, when the service type identified by the WAP GW 500 is the PIM service, the ENUM server 300 is inquired to acquire the address of the home PIM server of the user, and the WAP GW 500 may forward the service request to the home PIM server of the user. Here, the service server corresponding to PIM service is the PIM server.

Referring to Fig. 5, the WAP GW 500 may further include a receiving unit 501, a determining unit 502 and a resolving unit 503.

The receiving unit 501 is configured to receive a service request including a URL address.

The determining unit 502 is configured to determine whether the URL address matches a service flow.

The resolving unit 503 is configured to resolve the service content type included in the service request and identify the service type of the service request when the determination result of the determining unit 502 indicates that the URL address matches no service flow.

The determining unit 502 may determine whether the URL address matches a service flow. Further, the determining unit 502 may determine whether the URL address included in the service request is the URL address of the MMSC or the address of the home PIM server of the user.

The resolution result of the resolving unit 503 may include the service content type to which the service request belongs, for example the MMS service or the PIM service.

The WAP GW 500 may further include a transmitting unit 504 configured to transmit a request for inquiring the address of the service server corresponding to the identified service type. For example, when the resolution result is the MMS service, the transmitting unit 504 may transmit to the ENUM server 300 a request for inquiring the address of the home MMSC of the user.

With the technical solution described in the above-mentioned embodiments, service content type is identified correctly, which may enhance the fault toleration capability of application protocol gateway, improve the system's capability of processing service and realize user's service request. And they are easier to implement with lower cost and with little change for networking structure of the overall system.

The above description is only preferred embodiments of the present invention and is not for limiting the scope of the invention. The specification as a whole supports the protection scope of the present invention.

## Claims

1. A method for processing a service request, comprising:
receiving, (S11, S201) by a WAP gateway, a service request from a terminal including a URL address and a service content type of the service request, wherein the URL address is configured on the terminal; and
when the URL address is correctly configured on the terminal, (S22, S202-203) identifying, by the WAP gateway, a service type of the service request according to the URL address;
when the URL address is wrongly configured on the terminal, (S33, S204) identifying, by the WAP gateway, a service type of the service request according to the service content type included in the service request;
executing (S44, S205-S206) a corresponding service process according to the identified service type of the service request.

2. The method for identifying a service of claim 1, wherein the receiving the service request further comprises:
receiving, (S201) by the visited wireless application protocol gateway, the service request from the terminal of a roaming user.

3. The method for identifying a service of claim 1, wherein the executing a corresponding service process according to the identified service type of the service request comprises:
transmitting (S44) a request for inquiring an address of a service server corresponding to the identified service type.

4. The method for identifying a service of claim 1, wherein the executing a corresponding service process according to the identified service type of the service request comprises:
when the identified service type of the service request is a multimedia messaging service, the process proceeds to the MMS service procedure; or,
when the identified service type of the service request is a personal information management service, the process proceeds to the PIM service procedure.

5. The method for identifying a service of one of claims 1 to 4, wherein the service request including a service content type of the service request is:
the service request including a service type field, information carried in the service type field is the service content type of the service request.

6. An application protocol gateway, comprising:
a receiving unit, (501) configured to receive a service request from a terminal including a URL address and a service content type of the service request, wherein the URL address is configured on the terminal;
a determining unit (502) configured to determine whether the URL address is correctly configured on the terminal;
a resolving unit, (503) configured to when the URL address is correctly configured on the terminal , to identify a service type of the service request according to the URL address; when the URL address is wrongly configured on the terminal, to identify a service type of the service request according to the service content type included in the service request;
an executing unit, configured to execute a corresponding service process according to the identified service type of the service request.

7. The application protocol gateway of claim 6, wherein the executing unit is:
a transmitting unit (504), configured to transmit a request for inquiring an address of a service server corresponding to the identified service type.

8. The application protocol gateway of claim 6 or 7, wherein the service request including a service content type of the service request is:
the service request including a service type field, information carried in the service type field is the service content type of the service request.

9. The application protocol gateway of claim 6 or 7, wherein the identified service type of the service request is: a multimedia messaging service or a personal information management service.

10. A service processing system, comprising:
an application protocol gateway according to any of the claims 6 to 9, and the terminal configured to send the service request including a URL address and a service content type of the service request, wherein the URL address is configured on the terminal.

## Patentansprüche

1. Verfahren zum Verarbeiten einer Dienstanforderung, das Folgendes umfasst:
Empfangen (S11, S201) durch ein WAP-Gateway einer Dienstanforderung von einem Endgerät, die eine URL-Adresse und einen Dienstinhaltstyp der Dienstanforderung enthält, wobei die URL-Adresse in dem Endgerät konfiguriert wird; und
wenn die URL-Adresse in dem Endgerät richtig konfiguriert ist (S22, S202-203),
Identifizieren durch das WAP-Gateway eines Diensttyps der Dienstanforderung in Übereinstimmung mit der URL-Adresse;
wenn die URL-Adresse in dem Endgerät falsch konfiguriert ist (S33, S204),
Identifizieren durch das WAP-Gateway eines Diensttyps der Dienstanforderung in Übereinstimmung mit dem Dienstinhaltstyp, der in der Dienstanforderung enthalten ist;
Ausführen (S44, S205-S206) eines entsprechenden Dienstprozesses in Übereinstimmung mit dem identifizierten Diensttyp der Dienstanforderung.

2. Verfahren zum Identifizieren eines Diensts nach Anspruch 1, wobei das Empfangen der Dienstanforderung ferner Folgendes umfasst:
Empfangen (S201) durch das besuchte drahtlose Anwendungsprotokoll-Gateway der Dienstanforderung von dem Endgerät eines Roaming-Anwenders.

3. Verfahren zum Identifizieren eines Diensts nach Anspruch 1, wobei das Ausführen eines entsprechenden Dienstprozesses in Übereinstimmung mit dem identifizierten Diensttyp der Dienstanforderung Folgendes umfasst:
Senden (S44) einer Anforderung zum Abfragen einer Adresse eines Dienst-Servers,
der dem identifizierten Diensttyp entspricht.

4. Verfahren zum Identifizieren eines Diensts nach Anspruch 1, wobei das Ausführen eines entsprechenden Dienstprozesses in Übereinstimmung mit dem identifizierten Diensttyp der Dienstanforderung Folgendes umfasst:
wenn der identifizierte Diensttyp der Dienstanforderung ein Multimedia-Nachrichtendienst ist, Vorrücken des Prozesses zu der MMS-Dienstprozedur; oder
wenn der identifizierte Diensttyp der Dienstanforderung ein Managementdienst für persönliche Informationen ist, Vorrücken des Prozesses zu der PIM-Dienstprozedur.

5. Verfahren zum Identifizieren eines Diensts nach einem der Ansprüche 1 bis 4, wobei die Dienstanforderung, die einen Dienstinhaltstyp der Dienstanforderung enthält:
die Dienstanforderung ist, die ein Diensttypfeld enthält, wobei die in dem Diensttypfeld geführten Informationen der Dienstinhaltstyp der Dienstanforderung sind.

6. Anwendungsprotokoll-Gateway, das Folgendes umfasst:
eine Empfangseinheit (501), die konfiguriert ist, eine Dienstanforderung von einem Endgerät, die eine URL-Adresse und einen Dienstinhaltstyp der Dienstanforderung enthält, zu empfangen, wobei die URL-Adresse in dem Endgerät konfiguriert ist;
eine Bestimmungseinheit (502), die konfiguriert ist, zu bestimmen, ob die URL-Adresse in dem Endgerät richtig konfiguriert ist;
eine Auflösungseinheit (503), die konfiguriert ist, wenn die URL-Adresse in dem Endgerät richtig konfiguriert ist, einen Diensttyp der Dienstanforderung in Übereinstimmung mit der URL-Adresse zu identifizieren; und wenn die URL-Adresse in dem Endgerät falsch konfiguriert ist, einen Diensttyp der Dienstanforderung in Übereinstimmung mit dem in der Dienstanforderung enthaltenen Dienstinhaltstyp zu identifizieren;
eine Ausführungseinheit, die konfiguriert ist, einen entsprechenden Dienstprozess in Übereinstimmung mit dem identifizierten Diensttyp der Dienstanforderung auszuführen.

7. Anwendungsprotokoll-Gateway nach Anspruch 6, wobei die Ausführungseinheit:
eine Sendeeinheit (504) ist, die konfiguriert ist, eine Anforderung zum Abfragen einer Adresse eines Dienstservers, der dem identifizierten Diensttyp entspricht, zu senden.

8. Anwendungsprotokoll-Gateway nach Anspruch 6 oder 7, wobei die Dienstanforderung, die einen Dienstinhaltstyp der Dienstanforderung enthält:
die Dienstanforderung ist, die ein Diensttypfeld enthält, wobei die in dem Diensttypfeld geführten Informationen der Dienstinhaltstyp der Dienstanforderung sind.

9. Anwendungsprotokoll-Gateway nach Anspruch 6 oder 7, wobei der identifizierte Diensttyp der Dienstanforderung ein Multimedia-Nachrichtendienst oder ein Managementdienst für persönliche Informationen ist.

10. Dienstverarbeitungssystem, das Folgendes umfasst:
ein Anwendungsprotokoll-Gateway nach einem der Ansprüche 6 bis 9 und das Endgerät, das konfiguriert ist, die Dienstanforderung, die eine URL-Adresse und
einen Dienstinhaltstyp der Dienstanforderung enthält, zu senden, wobei die URL-Adresse in dem Endgerät konfiguriert ist.

## Revendications

1. Procédé de traitement d'une requête de service, comprenant :
la réception (S11, S20) par une passerelle WAP, d'une requête de service depuis un terminal comportant une adresse URL et un type de contenu de service de la requête de service, dans lequel l'adresse URL est configurée sur le terminal ; et
quand l'adresse URL est configurée correctement sur le terminal, l'identification (S22, S202-203), par la passerelle WAP, d'un type de service de la requête de service en fonction de l'adresse URL ;
quand l'adresse URL est configurée incorrectement sur le terminal, l'identification (S33, S204), par la passerelle WAP, d'un type de service de la requête de service en fonction du type de contenu de service inclus dans la requête de service ;
l'exécution (S44, S205-206) d'un processus de service correspondant en fonction du type de service identifié de la requête de service.

2. Procédé d'identification d'un service selon la revendication 1, dans lequel la réception de la requête de service comprend en outre :
la réception (S201), par la passerelle de protocole d'application sans fil visitée, de la requête de service depuis le terminal d'un utilisateur itinérant.

3. Procédé d'identification d'un service selon la revendication 1, dans lequel l'exécution d'un processus de service correspondant en fonction du type de service identifié de la requête de service comprend :
la transmission (S44) d'une requête d'interrogation d'une adresse d'un serveur de service correspondant au type de service identifié.

4. Procédé d'identification d'un service selon la revendication 1, dans lequel l'exécution d'un processus de service correspondant en fonction du type de service identifié de la requête de service comprend :
quand le type de service identifié de la requête de service est un service de messagerie multimédia, le processus passe à la procédure de service MMS ; ou
quand le type de service identifié de la requête de service est un service de gestion d'informations personnelles, le processus passe à la procédure de service PIM.

5. Procédé d'identification d'un service selon l'une quelconque des revendications 1 à 4, dans lequel la requête de service comportant un type de contenu de service de la requête de service est :
la requête de service comportant un champ de type de service, les informations incluses dans le champ de type de service étant le type de contenu de service de la requête de service.

6. Passerelle de protocole d'application, comprenant :
une unité de réception (501), configurée pour recevoir une requête de service depuis un terminal comportant une adresse URL et un type de contenu de service de la requête de service, l'adresse URL étant configurée sur le terminal ;
une unité de détermination (502), configurée pour déterminer que l'adresse URL est configurée correctement ou non sur le terminal ;
une unité de résolution (503), configurée pour, quand l'adresse URL est configurée correctement sur le terminal, identifier un type de service de la requête de service en fonction de l'adresse URL ; quand l'adresse URL est configurée incorrectement sur le terminal, identifier un type de service de la requête de service en fonction du type de contenu de service inclus dans la requête de service ;
une unité d'exécution, configurée pour exécuter un processus de service correspondant en fonction du type de service identifié de la requête de service.

7. Passerelle de protocole d'application selon la revendication 6, dans laquelle l'unité d'exécution est :
une unité de transmission (504), configurée pour transmettre une requête d'interrogation d'une adresse d'un serveur de service correspondant au type de service identifié.

8. Passerelle de protocole d'application selon la revendication 6 ou 7, dans laquelle la requête de service comportant un type de contenu de service de la requête de service est :
la requête de service comportant un champ de type de service, les informations incluses dans le champ de type de service étant le type de contenu de service de la requête de service.

9. Passerelle de protocole d'application selon la revendication 6 ou 7, dans laquelle le type de service identifié de la requête de service est : un service de messagerie multimédia ou un service de gestion d'informations personnelles.

10. Système de traitement de service, comprenant :
une passerelle de protocole d'application selon l'une quelconque des revendications 6 à 9, et le terminal configuré pour envoyer la requête de service comportant une adresse URL et un type de contenu de service de la requête de service, l'adresse URL étant configurée sur le terminal.
